(19) Europäisches Patentamt
European Patent Office
Office européen des brevets

(11) **EP 4 738 775 A1**

(12) **DEMANDE DE BREVET EUROPEEN**

(43) Date de publication:
**06.05.2026 Bulletin 2026/19**

(21) Numéro de dépôt: **25212233.8**

(22) Date de dépôt: **30.10.2025**

(51) Classification Internationale des Brevets (IPC):
**H04L 41/12** *(2022.01)* **H04L 12/40** *(2006.01)*
**H04L 43/10** *(2022.01)*

(52) Classification Coopérative des Brevets (CPC):
**H04L 41/12; H04L 12/40; H04L 43/10**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **31.10.2024 FR 2411944**

(71) Demandeur: **SCHNEIDER ELECTRIC INDUSTRIES SAS**
**92500 Rueil-Malmaison (FR)**

(72) Inventeur: **BERRONDO, Vincent**
**92500 RUEIL MALMAISON (FR)**

(74) Mandataire: **Lavoix**
**62, rue de Bonnel**
**69448 Lyon Cedex 03 (FR)**

(54) **PROCÉDÉ ET SYSTÈME DE DÉTERMINATION AUTOMATIQUE DE LA TOPOLOGIE D'UN RÉSEAU DE COMMUNICATION DE TYPE ETHERNET 10BASE-T1S**

(57) Ce procédé de détermination automatique de la topologie d'un réseau Ethernet 10BASE-T1S comportant plusieurs nœuds connectés sur un même tronc de communication comporte les étapes suivantes, exécutées par un nœud de contrôle qui est un nœud d'extrémité du tronc :
- initialisation (32) par envoi d'un message d'initialisation de la détermination de topologie, comprenant une instruction de passage en mode de simple réception, à tous les nœuds connectés,
o pour chacun des nœuds connectés, un envoi (36) d'un message d'activation de mesure audit nœud connecté, et une mise en œuvre (38) d'un procédé de mesure de distance entre le nœud de contrôle et ledit nœud connecté, et mémorisation (40) de la distance mesurée,
- détermination (44) de l'ordre de connexion des nœuds par rapport au nœud de contrôle en fonction des distances mémorisées, et
- envoi (42) d'un message d'arrêt de la détermination de topologie à tous les nœuds connectés.

*FIGURE.3*

EP 4 738 775 A1

**Description**

La présente invention concerne un procédé de détermination automatique de la topologie d'un réseau de communication de type Ethernet 10BASE-T1S, également connu sous le nom Ethernet sur une paire torsadée (en anglais « Ethernet over a single twisted pair »).

L'invention concerne également un dispositif de détermination automatique de la topologie d'un réseau de communication de type Ethernet 10BASE-T1S associé, un programme d'ordinateur associé et un système de détermination automatique de la topologie d'un réseau de communication de type Ethernet 10BASE-T1S associé.

L'invention se situe dans le domaine des communications sur Ethernet, et plus particulièrement dans le domaine de l'Ethernet 10BASE-T1S, défini par exemple dans le standard Std 802.3cg-2019 publié en février 2020 par l'IEEE (pour Institute of Electrical and Electronics Engineers), très utilisé pour des communications courte distance. Le standard 10BASE-T1S, qui permet une communication à 10Mbits/seconde, est utilisé dans le domaine automobile, le domaine industriel, et en particulier dans les systèmes électriques de connexion des multiples équipements électriques.

Dans les systèmes électriques, cela permet d'obtenir des dispositifs de commutation intelligents, chaque dispositif de commutation ayant des capacités de communication et formant un nœud de communication, également appelé simplement nœud, d'un réseau de communication.

Les nœuds de communication d'un réseau Ethernet 10BASE-T1S sont connectés à un tronc (ou bus) de communication commun, selon une topologie multipoints, appelée « multidrop network topology » en anglais. Les nœuds de communication sont connectés électriquement en parallèle au tronc de communication commun, ci-après « tronc » ou « tronc commun ». Cette topologie impose l'utilisation de procédés évitant des collisions entre les paquets de données émis par les différents nœuds connectés à un même tronc de communication commun, ce qui peut entrainer des pertes de données. Le standard IEEE Std 802.3cg-2019 décrit une méthode d'évitement de collisions, appelée PLCA (pour « physical layer collision avoidance » en anglais). Une méthode d'identification des nœuds de communication, permettant d'assigner des périodes d'émission à chaque nœud et par conséquent d'éviter des collisions, a été décrite dans la demande de brevet EP4135268 A1.

De plus, dans un réseau de communication du type précité, il est parfois nécessaire de connaître la topologie du réseau, en particulier l'ordre de connexion des nœuds de communication au tronc commun, ainsi que les distances entres les nœuds.

L'expression ordre de connexion se réfère à l'ordre spatial de connexion physique au tronc commun.

Le nombre de nœuds et l'ordre de connexion des nœuds est susceptible de changer, notamment lors d'opérations d'installation de nouveaux équipements électriques, de réparation ou de maintenance des équipements électriques du système électrique. En effet, dans diverses applications, il est fréquent d'ajouter ou de supprimer des nœuds de communication.

Une des fonctionnalités proposées par le comité Open Alliance TC14 spécifie la découverte de topologie du réseau (en anglais « topology discovery »), par un procédé de mesure de la distance sur une liaison physique entre deux nœuds de communication, ce procédé étant implémenté au niveau d'un émetteur-récepteur T1S de chaque nœud de communication. Ce procédé de mesure de distance est mis en œuvre au niveau de la couche physique ou « couche PHY », niveau 1 du modèle OSI - pour Open Systems Interconnection) par chaque nœud de communication et sera appelé par la suite procédé de mesure de la distance entre deux nœuds de communication connectés à un même tronc, ou simplement procédé de mesure. Par distance entre deux nœuds de communication on entend la longueur en unité de longueur, par exemple en centimètres, du câblage électrique entre lesdits nœuds. Cependant, le standard ne définit pas de procédé de contrôle des différents nœuds pour la mise en œuvre du procédé de mesure, permettant de déterminer automatiquement la topologie d'un réseau comportant plusieurs nœuds de communication connectés à un même tronc commun.

L'invention a pour objet de remédier à cet inconvénient, et de répondre au besoin de déterminer automatiquement la topologie d'un réseau de communication du type précité.

A cet effet, l'invention a pour objet un procédé de détermination automatique de la topologie d'un réseau de communication de type Ethernet 10BASE-T1S comportant une pluralité de nœuds connectés sur un même tronc de communication, la pluralité de nœuds comportant respectivement un premier nœud d'extrémité connecté à une première extrémité dudit tronc et un deuxième nœud d'extrémité connecté à une deuxième extrémité dudit tronc, le procédé comportant les étapes suivantes, mises en œuvre par un nœud de contrôle parmi le premier nœud d'extrémité et le deuxième nœud d'extrémité:

- initialisation par envoi d'un message d'initialisation de la détermination de topologie à tous les nœuds connectés, le message comprenant une instruction de passage dans un mode de simple réception,
- pour chacun des nœuds connectés autres que le nœud de contrôle, exécuter séquentiellement les étapes de :

  ○ envoi d'un message d'activation de mesure audit nœud connecté,
  ○ mise en œuvre d'un procédé de mesure de distance entre le nœud de contrôle et ledit nœud connecté, et mémorisation de la distance mesurée entre le nœud de contrôle et ledit nœud connecté,

- détermination de l'ordre de connexion des nœuds par rapport au nœud de contrôle en fonction des distances mémorisées,
- envoi d'un message d'arrêt de la détermination de topologie à tous les nœuds connectés, le message d'arrêt comprenant une instruction de passage dans un mode d'émission/réception.

Avantageusement, le procédé proposé permet de coordonner les nœuds de communication du tronc commun pour effectuer des mesures de distance par paires de nœuds et en déduire la topologie du réseau. Ce procédé de détermination automatique de la topologie d'un réseau de communication proposé permet de déduire l'ordre de connexion des nœuds de communication sur le tronc commun.

Suivant d'autres aspects avantageux de l'invention, le procédé de détermination automatique de la topologie du réseau comprend une ou plusieurs des caractéristiques suivantes, prises isolément ou suivant toutes les combinaisons techniquement possibles.

Le procédé comporte en outre une étape de diffusion d'un rapport de topologie du réseau, par le nœud de contrôle, à destination d'un ou plusieurs dispositifs distants connectés via un équipement réseau passerelle connecté audit nœud de contrôle, le rapport de topologie comportant une liste ordonnée de nœuds selon l'ordre de connexion déterminé, chaque nœud étant identifié par un identifiant unique.

La détermination de l'ordre de connexion des nœuds comporte un tri dans l'ordre croissant des distances mesurées mémorisées.

L'étape d'initialisation fait suite à une réception par le nœud de contrôle d'un message indicatif d'une connexion ou déconnexion d'au moins un nœud audit tronc.

L'étape d'initialisation fait suite à une réception par le nœud de contrôle d'une requête de détermination de topologie.

Le procédé comporte en outre une étape de vérification d'une condition de distance entre nœuds successifs selon l'ordre de connexion déterminé, et lorsqu'une distance entre nœuds successifs est inférieure à un seuil de distance minimum, une émission d'un message d'alerte.

Suite à une réception d'un message d'initialisation de la détermination de la topologie, chacun des nœuds connectés distincts du nœud de contrôle démarre un chronomètre, et suite à une réception d'un message d'arrêt de la détermination de topologie, ou lorsque le chronomètre atteint un seuil de durée prédéterminé, chacun des nœuds connectés se remet en mode d'émission et réception.

L'invention concerne également un dispositif de détermination automatique de la topologie d'un réseau de communication de type Ethernet 10BASE-T1S comportant une pluralité de nœuds connectés sur un même tronc de communication, ladite pluralité de nœuds comportant respectivement un premier nœud d'extrémité connecté à une première extrémité dudit tronc et un deuxième nœud d'extrémité connecté à une deuxième extrémité dudit tronc, le dispositif de détermination automatique de la topologie étant un nœud de contrôle parmi le premier nœud d'extrémité et le deuxième nœud d'extrémité, et étant configuré pour exécuter des modules de :

- initialisation par envoi d'un message d'initialisation de la détermination de topologie à tous les nœuds connectés, le message comprenant une instruction de passage dans un mode de simple réception,
- pour chacun des nœuds connectés autres que le nœud de contrôle, exécuter séquentiellement :

  ○ un envoi d'un message d'activation de mesure audit nœud connecté,
  ○ une mise en œuvre d'un procédé de mesure de distance entre le nœud de contrôle et ledit nœud connecté, et une mémorisation de la distance mesurée entre le nœud de contrôle et ledit nœud connecté,

- détermination de l'ordre de connexion des nœuds par rapport au nœud de contrôle en fonction des distances mémorisées,
- envoi d'un message d'arrêt de la détermination de topologie à tous les nœuds connectés, le message d'arrêt comprenant une instruction de passage dans un mode d'émission/réception.

L'invention concerne également un système de détermination automatique de la topologie d'un réseau Ethernet 10BASE-T1S comportant une pluralité de nœuds connectés sur un même tronc de communication, ladite pluralité de nœuds comportant respectivement un premier nœud d'extrémité connecté à une première extrémité dudit tronc et un deuxième nœud d'extrémité connecté à une deuxième extrémité dudit tronc, le système comportant un nœud de contrôle parmi le premier nœud d'extrémité et le deuxième nœud d'extrémité, configuré pour mettre en œuvre un procédé de détermination automatique de la topologie du réseau tel que décrit ci-dessus, chaque nœud connecté distinct du nœud de contrôle étant configuré pour mettre en œuvre suite à une réception d'un message d'initialisation de la détermination de la topologie, un passage en mode de simple réception et un démarrage d'un chronomètre, et suite à une réception d'un message d'arrêt de la détermination de topologie, ou lorsque le chronomètre atteint un seuil de durée prédéterminé, un passage en mode d'émission et réception.

L'invention concerne également un programme d'ordinateur comportant des instructions logicielles qui, lorsqu'elles sont exécutées par un dispositif électronique programmable, mettent en œuvre un procédé de détermination automatique de la topologie du réseau tel que défini ci-dessus.

L'invention apparaîtra plus clairement à la lecture de la description qui va suivre, donnée uniquement à titre d'exemple non limitatif, et faite en référence aux dessins dans lesquels :

la figure 1 est une représentation schématique d'un réseau de communication Ethernet 10BASE-T1S comportant une pluralité de nœuds dans un système électrique ;
la figure 2 est un synoptique des principaux blocs d'un nœud de communication de la figure 1 ;
la figure 3 est un logigramme des principales étapes d'un procédé de détermination automatique de la topologie d'un réseau selon un mode de réalisation ;
la figure 4 illustre deux cas dans lesquels la distance mesurée entre des nœuds ne respecte pas une condition de seuil de distance minimum.

L'invention sera décrite ci-après plus particulièrement dans son application dans un système électrique intégré dans une armoire électrique, comportant une pluralité de démarreurs de moteurs électriques installés les uns à côté des autres dans l'armoire électrique, chaque démarreur de moteur électrique comportant une interface de communication permettant de le connecter dans un réseau Ethernet 10Base-T1S.

Bien entendu, l'invention n'est pas limitée à ce cas d'application.

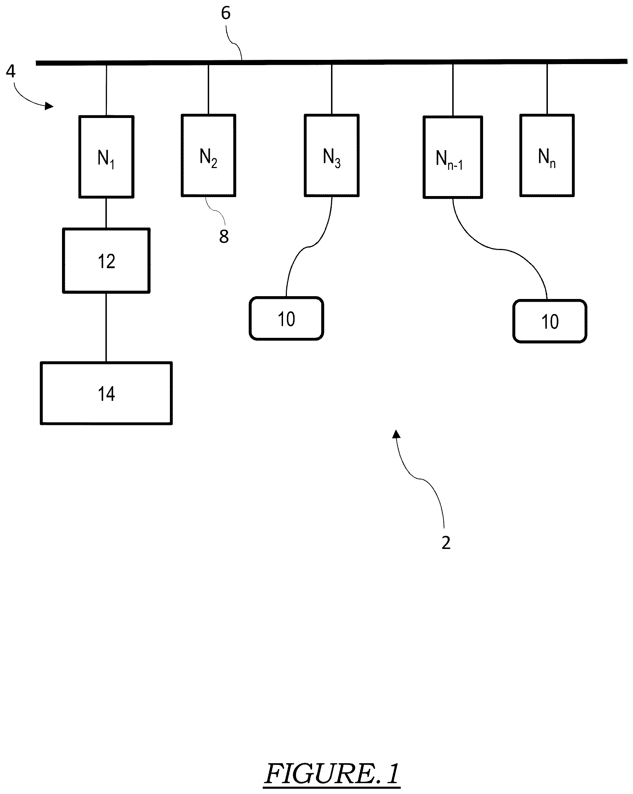

La figure 1 illustre schématiquement un système électrique 2 comportant un réseau de communication 4 filaire à topologie multipoints (« multidrop network topology »), de type Ethernet 10Base-T1S.

Le réseau de communication 4 comporte un tronc (ou bus) de communication Ethernet, référencé 6 sur la figure 1, et une pluralité de nœuds de communication 8, connectés au tronc 6, qui seront également appelés simplement nœuds par la suite, respectivement numérotés nœud $N_1$, nœud $N_2$, ..., nœud $N_n$. Le tronc 6 est formé d'une seule paire de câbles torsadés formant un tronc linéaire conformément au standard Ethernet 10Base-T1S.

Un nœud de communication est configuré pour être soit dans un premier mode dit «simple réception», dans lequel il ne peut émettre aucun message, soit dans un deuxième mode, dit «émission/réception», dans lequel il peut émettre sans restriction.

Dans l'exemple d'application, au moins certains des nœuds de communication 8 sont des démarreurs de moteur électrique munis d'une interface de communication Ethernet 10Base-T1S. Des équipements électriques 10, qui sont dans cet exemple des moteurs électriques, sont connectés via des câbles électriques aux démarreurs respectifs.

Plus généralement, dans un mode de réalisation, chaque nœud 8 est un dispositif électrique, par exemple un commutateur, un contacteur, un disjoncteur, tout type de dispositif de protection électrique, ou encore un capteur électrique.

Il est néanmoins entendu que d'autres modes de réalisation sont envisageables.

Parmi la pluralité de nœuds 8 connectés au tronc 6, on distingue des nœuds d'extrémité, respectivement un premier nœud d'extrémité, qui est le nœud $N_1$ dans l'exemple de la figure 1, connecté à une première extrémité du tronc et un deuxième nœud d'extrémité, qui est le nœud $N_n$ dans l'exemple de la figure 1, connecté à une deuxième extrémité du tronc 6. En d'autres termes, les nœuds d'extrémité sont le premier et le dernier des nœuds connectés au tronc 6, chacun des nœuds d'extrémité ayant un seul nœud voisin, successeur ou prédécesseur, parmi les nœuds connectés.

L'un des nœuds d'extrémité, dans l'exemple de la figure 1 le nœud $N_1$, est un nœud de tête de réseau ou un commutateur, connecté par une liaison physique, de préférence câblée, à un équipement réseau 12 Ethernet, par exemple un commutateur ou un routeur, qui est de préférence un équipement réseau passerelle permettant de communiquer avec d'autres sous-réseaux. Ce nœud d'extrémité $N_1$ est un nœud de contrôle, avantageusement configuré pour mettre en œuvre le procédé de détermination automatique de la topologie du réseau.

Dans un mode de réalisation, le nœud $N_1$ est un commutateur comportant plusieurs ports 10BASE-T1S, configuré pour mettre en œuvre la fonctionnalité de nœud de contrôle sur chacun des ports 10BASE-T1S.

Dans un mode de réalisation, le nœud $N_1$ est connecté à l'équipement réseau 12 par une liaison Ethernet 100Base-Tx.

En particulier, l'équipement réseau 12 permet la communication bidirectionnelle avec d'autres dispositifs distants connectés, par exemple un dispositif 14 de supervision et de contrôle SCADA (pour « Supervisory Control and Data Acquisition »). Le dispositif 14 est par exemple opéré par un opérateur ou accessible par un terminal d'opérateur distant, muni d'interfaces homme-machine, pour effectuer des contrôles de fonctionnement du système électrique surveillé.

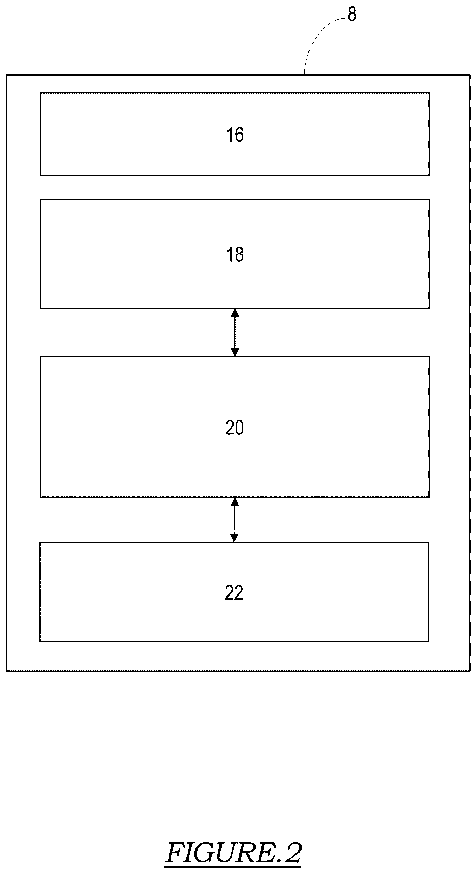

Comme illustré à la figure 2, chaque nœud 8 comporte un module 16 configuré pour mettre en œuvre la fonction principale du dispositif électrique associé dans le système électrique 2.

En outre, chaque nœud de communication comporte un processeur 18 et une mémoire électronique 20, formant un dispositif électronique programmable configuré pour exécuter des instructions logicielles (ou « software »). En particulier le nœud de contrôle est configuré pour exécuter des instructions logicielles pour la mise en œuvre d'un procédé de détermination automatique de la topologie du réseau de communication décrit en détail ci-après.

Le procédé de détermination automatique de topologie du réseau est par exemple mis en œuvre sous forme de modules ou briques logicielles formant un programme d'ordinateur ou sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*). Le programme d'ordinateur est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique.

De plus, chaque nœud 8 comporte une interface réseau 22, comportant notamment un connecteur Ethernet, configurée pour implémenter des fonctionnalités du protocole IEEE 802.3cg-2019 au niveau physique, en particulier l'évitement de collision PLCA, ainsi que le procédé de mesure de distance entre deux nœuds spécifié dans la spécification « OPEN Alliance 10BASE-T1S Topology Discovery », version 1 publiée le 21 mars 2023. L'interface réseau 22 met en œuvre les fonctionnalités d'émission et de réception des données selon le standard IEEE 802.3cg-2019.

Le procédé de détermination automatique de la topologie du réseau est soit mis en œuvre sur requête, par exemple sur une requête de détermination de topologie reçue par le nœud de contrôle en provenance de l'équipement réseau 12, soit sur réception par le nœud de contrôle d'un message indicatif d'une connexion ou déconnexion d'au moins un nœud 8 au tronc 6.

Le procédé de détermination automatique de la topologie du réseau est mis en œuvre par le nœud de contrôle dans le but de déterminer la topologie, et en particulier l'ordre de connexion des nœuds respectifs 8 de la pluralité de nœuds connectés au tronc 6 par rapport à nœud de contrôle Nc sélectionné, qui joue également le rôle de nœud de référence pour les mesures de distance entre nœuds d'une paire de nœuds.

Afin de distinguer les différents nœuds 8, chaque nœud a un identifiant unique, par exemple un identifiant physique unique, ou UID (de l'anglais Unique Identifier), qui est par exemple un identifiant matériel du nœud, comme son adresse physique (également appelée adresse MAC de l'anglais Media Access Control) ou un identifiant unique de produit fourni lors de la fabrication.

Afin d'assurer une détermination correcte de la topologie, le nœud de contrôle Nc sélectionné est un des nœuds d'extrémité, par exemple le premier nœud d'extrémité $N_1$ ou le deuxième nœud d'extrémité $N_n$.

De préférence, le nœud de contrôle sélectionné est le nœud d'extrémité connecté à l'équipement réseau 12.

Le nœud de contrôle assure la fonctionnalité de contrôle (ou de coordination) des autres nœuds connectés au tronc commun 6 pour la détermination automatique de la topologie du réseau, et une fonctionnalité de nœud de référence pour la mesure de distance selon le procédé de mesure. Ainsi, la détermination automatique de la topologie du réseau permet d'obtenir l'ordre de connexion des nœuds sur le tronc 6, ainsi que les distances entre nœuds connectés successifs.

Selon la spécification « OPEN Alliance 10BASE-T1S Topology Discovery », une mesure de distance entre deux nœuds, $N_A$ et $N_B$ est réalisable lorsque tous les autres nœuds du réseau sont en mode de simple réception (ou limité à la réception), toute émission sur le tronc étant inhibée afin d'éviter les interférences et les perturbations. En d'autres termes, les autres nœuds du réseau, qui sont distincts des nœuds $N_A$ et $N_B$, sont silencieux (dit autrement, n'émettent pas de message) pendant la réalisation de la mesure de distance entre les nœuds $N_A$ et $N_B$ par le procédé de mesure.

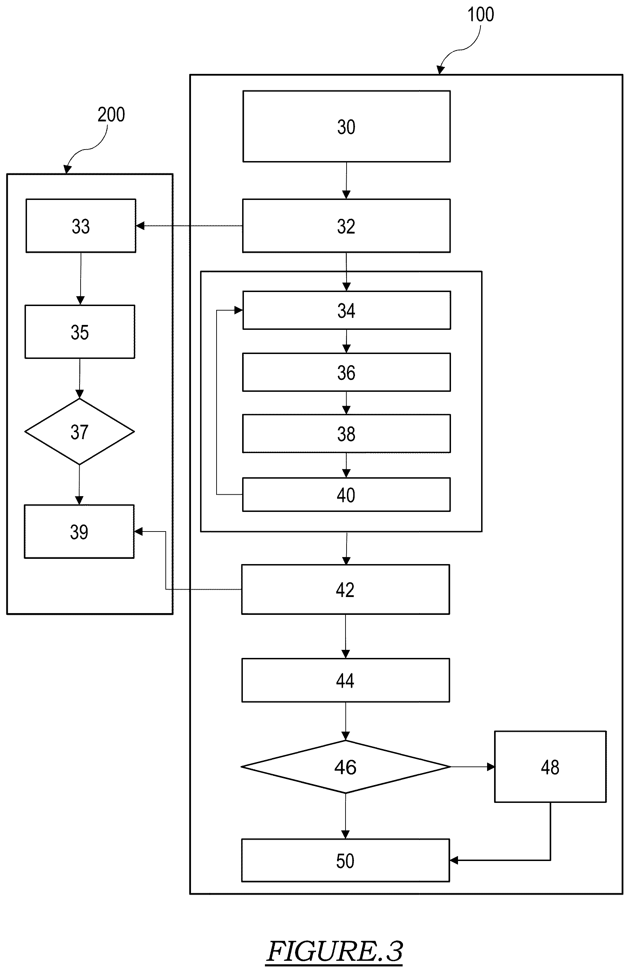

La figure 3 est un synoptique des principales étapes du procédé de détermination automatique de la topologie d'un réseau de communication de type Ethernet 10BASE-T1S selon un mode de réalisation.

Les étapes 100 sont mises en œuvre par un nœud de contrôle Nc, et les étapes 200 sont mises en œuvre par les autres nœuds connectés au tronc 6.

Dans de nombreuses applications, le nœud de contrôle est un nœud passerelle ou commutateur T1S/100Base-Tx.

Le procédé comprend plusieurs étapes effectuées par le nœud de contrôle Nc, initiées par une activation 30 de la détermination de la topologie du réseau de communication.

L'activation 30 fait par exemple suite à une réception d'une requête de détermination de la topologie sur le réseau de communication, ou suite à la réception d'un message indiquant une connexion ou déconnexion d'un ou plusieurs nœud(s) de communication du réseau.

Selon un mode de réalisation, la connexion ou déconnexion d'un ou plusieurs nœuds de communication du réseau induit la réallocation d'identifiants PLCA aux nœuds 8 connectés, par exemple mise en œuvre par le procédé décrit dans EP 4135268 A1. Les identifiants PLCA réalloués sont communiqués par message de diffusion (ou « broadcast ») à tous les nœuds du réseau.

En variante ou en complément, l'activation 30 est mise en œuvre de manière répétitive à intervalles temporels réguliers.

L'étape d'activation 30 est suivie d'une étape 32 d'initialisation de la détermination de la topologie par envoi par le nœud de contrôle d'un message d'initialisation de la détermination de la topologie destiné à tous les autres nœuds connectés, par exemple un message de type « broadcast », qui est reçu par tous les nœuds connectés sur le tronc, comprenant une instruction de passage dans le mode de simple réception. Toute émission par l'un de ces autres nœuds est alors inhibée.

Suite à la réception d'un message d'initialisation de la détermination de la topologie, envoyé par le nœud de contrôle, chacun des nœuds connectés se met en mode de simple réception (étape 33) et démarre (étape 35) un chronomètre (ou « timer »), qu'il surveille indépendamment des autres nœuds connectés.

Le nœud de contrôle Nc met en œuvre une étape 34 de sélection d'un nœud Nm connecté au tronc, appelé nœud mesuré, puis émet, dans une étape d'envoi 36, un message d'activation de mesure audit nœud mesuré Nm.

Chacun des nœuds est identifié par un identifiant unique, qui est soit son adresse physique, soit un identifiant PLCA déterminé selon le procédé décrit dans la demande de brevet EP4135268 A1.

La sélection d'un nœud Nm suivant se fait, dans un mode de réalisation, dans un ordre de parcours prédéterminé, par exemple l'ordre croissant ou décroissant des identifiants.

Alternativement, la sélection d'un nœud Nm suivant se fait dans un ordre aléatoire.

Ensuite, sur commande du nœud de contrôle est effectuée une mise en œuvre (étape 38) du procédé de mesure, le nœud de contrôle Nc étant le « nœud de référence » pour la mesure, le nœud Nm étant le « nœud mesuré ». Dit autrement, lors de l'étape 38, le nœud de contrôle $N_C$ exécute le procédé de mesure afin de déterminer la distance entre le nœud de contrôle $N_c$ et le nœud $N_m$ sélectionné.

Les étapes d'envoi 36 et de mise en œuvre 38 du procédé de mesure sont effectuées séquentiellement, c'est-à-dire l'une après l'autre. Les étapes d'envoi 36 et de mise en œuvre 38 du procédé de mesure sont répétées pour chaque nœud à mesurer, l'un après l'autre.

Le nœud Nm est configuré pour émettre, lorsqu'il est en mode « simple/réception », des messages en réponse aux messages du nœud de contrôle Nc selon le procédé de mesure.

La distance entre le nœud de contrôle Nc et le nœud Nm, Dist(Nc, Nm), déterminée grâce à la mise en œuvre du procédé de mesure de distance est mémorisée par le nœud de contrôle à l'étape de mémorisation 40, par exemple dans la mémoire 20 du nœud de contrôle.

Les étapes 34 à 40 sont mises en œuvre pour chacun des nœuds connectés au tronc 6.

Après la mesure de la distance entre le nœud de contrôle Nc et chacun des autres nœuds connectés au tronc 6, le nœud de contrôle Nc envoie alors un message d'arrêt de la détermination de topologie à l'étape 42, à destination de tous les nœuds connectés, par exemple grâce à un message de type « broadcast », comprenant une instruction de passage dans le mode de communication « émission/réception », de préférence implémentant l'évitement de collision PLCA.

Chaque nœud $N_k$ connecté surveille (étape 37) la valeur du chronomètre lancé suite à la réception d'un message d'initialisation de la détermination de topologie, et si la valeur du chronomètre atteint ou dépasse un seuil de durée prédéterminé, alors que le nœud $N_k$ est en mode de simple réception, le nœud $N_k$ se met en mode d'émission/réception (étape 39).

Le seuil de durée prédéterminé est par exemple de l'ordre de 1 seconde, cette durée étant compatible avec la durée prévue pour l'exécution des étapes de détermination de la topologie du réseau.

Avantageusement, grâce à la surveillance autonome d'un chronomètre par chaque nœud de communication, même en cas de perte (ou absence de réception) du message d'arrêt de la détermination de topologie envoyé par le nœud de contrôle à l'étape 42, chaque nœud de communication se remet en mode d'émission/-réception lorsque le seuil de durée prédéterminé est atteint. Cela évite donc qu'un nœud de communication ne reste bloqué en mode « simple/réception » si le message d'arrêt de la détermination de topologie envoyé par le nœud de contrôle à l'étape 42 n'est pas reçu par ledit nœud de communication.

Lorsque la mesure de la distance entre le nœud de contrôle et chacun des autres nœuds est terminée avec succès, le nœud de contrôle Nc met en œuvre une étape 44 de détermination de l'ordre de connexion des nœuds sur le tronc, par rapport au nœud de contrôle, en fonction des distances mesurées mémorisées.

Selon un mode de réalisation, l'étape 44 comporte un tri des distances mesurées mémorisées dans l'ordre croissant de distances. Une liste ordonnée des nœuds de communication, identifiés par leur identifiant unique, est alors obtenue, cette liste fournissant l'ordre de connexion des nœuds sur le tronc en partant du nœud de contrôle. Le nœud de contrôle s'ajoute à cette liste en première position

Les étapes 42 d'envoi d'un message d'arrêt de la détermination de la topologie et 44 de détermination de l'ordre de connexion des nœuds sur le tronc peuvent être effectuées dans n'importe quel ordre.

Le nœud de contrôle étant un des nœuds d'extrémité, la topologie du réseau est entièrement déterminée.

Il est également possible de calculer la distance entre deux nœuds de n'importe quelle paire de nœuds sélectionnée, et en particulier la distance entre nœuds successifs.

En effet, pour deux nœuds respectifs $N_A$ et $N_B$, le procédé décrit fournit la distance de chacun de ces nœuds au nœud de contrôle Nc, respectivement Dist($Nc,N_A$) et Dist($Nc,N_B$).

La distance entre les $N_A$ et $N_B$ est alors simplement égale à la différence, en valeur absolue, entre les distances respectives Dist($Nc,N_A$) et Dist($Nc,N_B$) :

$$D_{AB}=Abs(Dist(Nc,N_A)-Dist(Nc,N_B))$$

De préférence, le nœud de contrôle met en œuvre en plus une étape 46 de vérification d'une condition de distance entre nœuds successifs selon l'ordre de connexion des nœuds indiqué par l'ordre croissant des distances mesurées.

L'étape 46 comporte le calcul de la distance entre nœuds de chaque paire de nœud successifs et la comparaison de cette distance à un seuil de distance minimum $D_{min}$.

En effet, le procédé de mesure de la distance entre deux nœuds permet de déterminer la distance entre les deux nœuds avec une marge d'erreur (ou précision) E. Tenant compte de cette marge d'erreur E, on considère que si la distance déterminée entre une paire de deux nœuds successifs est inférieure à une distance minimale $D_{min}$, alors il n'est pas possible de garantir avec une certitude suffisante l'ordre de connexion de ces deux nœuds sur le tronc.

En d'autres termes, les différences entre termes successifs de la liste de distances ordonnées sont calculées, et chacune de ces différences est comparée au seuil de distance minimum $D_{min}$.

Selon la spécification « OPEN Alliance 10BASE-T1S Topology Discovery », la marge d'erreur E est typiquement de l'ordre de 15 cm. Le seuil de distance minimum $D_{min}$ peut être choisi égal à deux fois la valeur de la marge d'erreur E, soit par exemple 30 cm.

Ce seuil de distance minimum $D_{min}$ peut varier en fonction de valeurs de dimensionnement spécifiques aux cas d'application, particulièrement selon la valeur de la marge d'erreur E.

Si la distance entre deux nœuds successifs est inférieure au seuil de distance minimum $D_{min}$, alors il est considéré qu'il y a possiblement une erreur. Dans ce cas, l'étape 46 de vérification d'une condition de distance est alors suivie d'une étape 48 d'émission d'un message d'alerte. Par exemple, une telle alerte, émise sur une interface homme machine à destination d'un opérateur, par exemple d'un installateur, indique à l'opérateur qu'il convient de vérifier le câblage physique.

Lorsqu'un message d'alerte est émis, cela indique que deux nœuds sont à une distance évaluée inférieure au seuil de distance minimum $D_{min}$, ce qui peut être dû soit à une erreur de câblage ou à une erreur de mesure, ou encore, dans un cas particulier, à une erreur sur le choix du nœud de contrôle qui aboutit à une détermination de topologie faussée.

Le procédé comporte en outre une étape 50 de diffusion d'un rapport de topologie du réseau, par le nœud de contrôle, à destination d'un ou plusieurs dispositifs distants connectés par exemple à l'équipement réseau 12 qui forme une passerelle de communication. Par exemple, le rapport de topologie comporte la liste ordonnée des nœuds connectés selon l'ordre de connexion déterminé lors de l'étape 44, chaque nœud étant identifié par son identifiant unique.

Optionnellement, le rapport de topologie comporte également les distances entre nœuds successifs.

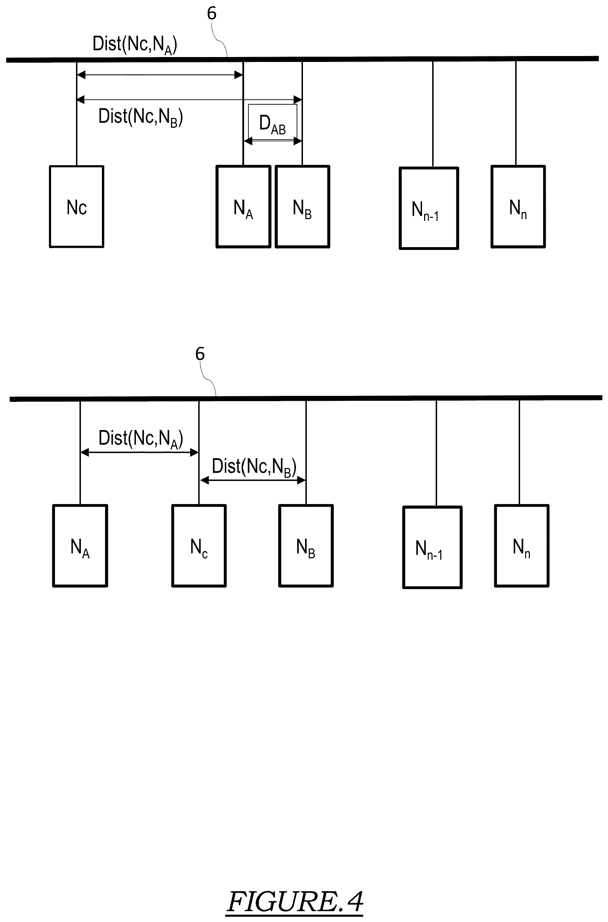

La figure 4 illustre deux exemples de topologie dans lesquels une alerte est émise suite à l'étape de vérification 46.

Dans le premier exemple, illustré dans la partie haute de la figure 4, deux nœuds voisins $N_A$ et $N_B$ sont à une distance $D_{AB}$ inférieure au seuil de distance minimum $D_{min}$. Il s'agit alors par exemple d'une erreur de câblage.

Dans le deuxième exemple, illustré dans la partie basse de la figure 4, si le nœud de contrôle Nc sélectionné n'est pas un des nœuds d'extrémité du tronc commun 6, les distances respectives $Dist(Nc,N_A)$ et $Dist(Nc,N_B)$ sont très proches, et donc leur différence est inférieure au seuil de distance minimum $D_{min}$, alors que les nœuds respectifs $N_A$ et $N_B$ sont en pratique connectés de part et d'autre du nœud de contrôle Nc. Il convient alors de modifier les câblages et de relancer le procédé de détermination de la topologie.

**Revendications**

1. Procédé de détermination automatique de la topologie d'un réseau de communication (4) de type Ethernet 10BASE-T1S comportant une pluralité de nœuds (8) connectés sur un même tronc de communication (6), la pluralité de nœuds (8) comportant respectivement un premier nœud d'extrémité connecté à une première extrémité dudit tronc (6) et un deuxième nœud d'extrémité connecté à une deuxième extrémité dudit tronc (6), le procédé étant **caractérisé en ce qu'**il comporte les étapes suivantes, mises en œuvre par un nœud de contrôle (Nc) parmi le premier nœud d'extrémité ($N_1$) et le deuxième nœud d'extrémité ($N_n$) :

   - initialisation (32) par envoi d'un message d'initialisation de la détermination de topologie à tous les nœuds (8) connectés, le message comprenant une instruction de passage dans un mode de simple réception,
   - pour chacun des nœuds (8) connectés autres que le nœud de contrôle, exécuter séquentiellement les étapes de :

     ○ envoi (36) d'un message d'activation de mesure audit nœud (8) connecté,
     ○ mise en œuvre (38) d'un procédé de mesure de distance entre le nœud de contrôle et ledit nœud (8) connecté, et mémorisation (40) de la distance mesurée entre le nœud de contrôle et ledit nœud (8) connecté,

   - détermination (44) de l'ordre de connexion des nœuds par rapport au nœud de contrôle en fonction des distances mémorisées,
   - envoi (42) d'un message d'arrêt de la détermination de topologie à tous les nœuds (8) connectés, le message d'arrêt comprenant une instruction de passage dans un mode d'émission/réception.

2. Procédé selon la revendication 1, comportant en outre une étape de diffusion (50) d'un rapport de topologie du réseau, par le nœud de contrôle, à destination d'un ou plusieurs dispositifs distants (14) connectés via un équipement réseau passerelle (12) connecté audit nœud de contrôle, le rapport de topologie comportant une liste ordonnée de nœuds (8) selon l'ordre de connexion déterminé, chaque nœud étant identifié par un identifiant unique.

3. Procédé selon l'une des revendications 1 ou 2, dans lequel la détermination (44) de l'ordre de connexion des nœuds comporte un tri dans l'ordre croissant des distances mesurées mémorisées.

4. Procédé selon l'une quelconque des revendications 1 à 3, dans lequel l'étape d'initialisation (32) fait suite à une réception par le nœud de contrôle d'un message indicatif d'une connexion ou déconnexion d'au moins un nœud audit tronc.

5. Procédé selon l'une quelconque des revendications 1 à 3, dans lequel l'étape d'initialisation (32) fait suite à une réception par le nœud de contrôle d'une requête de détermination de topologie.

6. Procédé selon l'une quelconque des revendications 1 à 5, comportant en outre une étape de vérification (46) d'une condition de distance entre nœuds successifs selon l'ordre de connexion déterminé, et lorsqu'une distance entre nœuds successifs est inférieure à un seuil de distance minimum, une émission (58) d'un message d'alerte.

7. Procédé selon l'une quelconque des revendications 1 à 6, dans lequel suite à une réception (33) d'un message d'initialisation de la détermination de la topologie, chacun des nœuds (8) connectés distincts du nœud de contrôle (Nc) démarre (35) un chronomètre, et suite à une réception d'un message d'arrêt de la détermination de topologie, ou lorsque le chronomètre atteint (37) un seuil de durée prédéterminé, chacun des nœuds (8) connectés se remet (39) en mode d'émission et réception.

8. Programme d'ordinateur comportant des instructions logicielles qui, lorsqu'elles sont exécutées par un dispositif électronique programmable, mettent en œuvre un procédé de détermination automatique de la topologie du réseau conforme aux revendications 1 à 7.

9. Dispositif de détermination automatique de la topologie d'un réseau de communication de type Ethernet 10BASE-T1S comportant une pluralité de nœuds (8) connectés sur un même tronc de communication (6), ladite pluralité de nœuds (8) comportant respectivement un premier nœud d'extrémité ($N_1$) connecté à une première extrémité dudit tronc (6) et un deuxième nœud d'extrémité ($N_n$) connecté à une deuxième extrémité dudit tronc (6), le dispositif de détermination automatique de la topologie étant un nœud de contrôle (Nc) parmi le premier nœud d'extrémité et le deuxième nœud d'extrémité, et étant configuré pour exécuter des modules de :

- initialisation par envoi d'un message d'initialisation de la détermination de topologie à tous les nœuds (8) connectés, le message comprenant une instruction de passage dans un mode de simple réception,
- pour chacun des nœuds (8) connectés autres que le nœud de contrôle, exécuter séquentiellement :

  ○ un envoi d'un message d'activation de mesure audit nœud (8) connecté,
  ○ une mise en œuvre d'un procédé de mesure de distance entre le nœud de contrôle et ledit nœud connecté (8), et une mémorisation de la distance mesurée entre le nœud de contrôle et ledit nœud connecté,

- détermination de l'ordre de connexion des nœuds par rapport au nœud de contrôle en fonction des distances mémorisées,
- envoi d'un message d'arrêt de la détermination de topologie à tous les nœuds connectés, le message d'arrêt comprenant une instruction de passage dans un mode d'émission/réception.

10. Système de détermination automatique de la topologie d'un réseau de communication (4) de type Ethernet 10BASE-T1S comportant une pluralité de nœuds (8) connectés sur un même tronc de communication (6), ladite pluralité de nœuds (8) comportant respectivement un premier nœud d'extrémité connecté à une première extrémité dudit tronc (6) et un deuxième nœud d'extrémité connecté à une deuxième extrémité dudit tronc (6), le système (4) étant **caractérisé en ce qu'**un nœud de contrôle (Nc) parmi le premier nœud d'extrémité et le deuxième nœud d'extrémité est configuré pour mettre en œuvre un procédé de détermination automatique de la topologie du réseau conforme aux revendications 1 à 6 et chaque nœud connecté (8) distinct du nœud de contrôle met en œuvre suite à une réception d'un message d'initialisation de la détermination de la topologie, un passage en mode de simple réception et un démarrage d'un chronomètre, et suite à une réception d'un message d'arrêt de la détermination de topologie, ou lorsque le chronomètre atteint un seuil de durée prédéterminé, un passage en mode d'émission et réception.

*FIGURE.1*

8

```
┌─────────────────────────────────────┐
│  ┌───────────────────────────────┐  │
│  │                               │  │
│  │              16               │  │
│  │                               │  │
│  └───────────────────────────────┘  │
│  ┌───────────────────────────────┐  │
│  │                               │  │
│  │              18               │  │
│  │                               │  │
│  └───────────────────────────────┘  │
│              ↕                       │
│  ┌───────────────────────────────┐  │
│  │                               │  │
│  │                               │  │
│  │              20               │  │
│  │                               │  │
│  │                               │  │
│  └───────────────────────────────┘  │
│              ↕                       │
│  ┌───────────────────────────────┐  │
│  │                               │  │
│  │              22               │  │
│  │                               │  │
│  └───────────────────────────────┘  │
└─────────────────────────────────────┘
```

## FIGURE.2

*FIGURE.3*

FIGURE.4

**Europäisches Patentamt**
**European Patent Office**
**Office européen des brevets**

# RAPPORT DE RECHERCHE EUROPEENNE

Numéro de la demande

EP 25 21 2233

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "Topology Discovery Feature for 10BASE-T1S Multi-Drop Networks", , 1 novembre 2022 (2022-11-01), pages 1-28, XP093247420, Extrait de l'Internet: URL:https://standards.ieee.org/wp-content/uploads/2022/12/D2_10_Piergiorgio-Beruto_Topology-Discovery-Feature-for-10BASE-T1S-Multi-Drop-Networks-A-method-for-locating-and-enumerating-potentially-iden.pdf [extrait le 2025-05-08] * page 3 * * page 8 * * page 12 - page 14 * * page 18 * * page 20 - page 21 * * page 26 * ----- | 1-10 | INV. H04L41/12 H04L12/40 H04L43/10 |
| X | US 2024/171471 A1 (THOMPSON FREDERICK CARNEGIE [IE] ET AL) 23 mai 2024 (2024-05-23) * alinéa [0016] - alinéa [0017] * * alinéa [0019] - alinéa [0023] * * alinéa [0043] - alinéa [0044]; figure 1 * ----- | 1-4,8-10 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 23 février 2026 | Camba, Sonia |

EPO FORM 1503 03.82 (P04C02)

**EP 4 738 775 A1**

**ANNEXE AU RAPPORT DE RECHERCHE EUROPEENNE
RELATIF A LA DEMANDE DE BREVET EUROPEEN NO.**

EP 25 21 2233

23-02-2026

| Document brevet cité au rapport de recherche | Date de publication | Membre(s) de la famille de brevet(s) | Date de publication |
|---|---|---|---|
| US 2024171471 A1 | 23-05-2024 | DE 112022001890 T5 | 18-01-2024 |
| | | US 2024171471 A1 | 23-05-2024 |
| | | WO 2022207883 A1 | 06-10-2022 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 4135268 A1